# EUROPÄISCHE PATENTANMELDUNG

(11) **EP 4 631 786 A1**
(43) Veröffentlichungstag der Anmeldung: **15.10.2025**
(21) Anmeldenummer: 24170123.4
(22) Anmeldetag: 13.04.2024
(51) Int. Cl.: B60Q 1/00, B60Q 1/08, B60Q 1/14, F21S 41/60

(54) **VERFAHREN ZUM BETREIBEN WENIGSTENS EINER LEUCHTVORRICHTUNG EINES FAHRZEUGS UND LEUCHTVORRICHTUNG**

(71) Anmelder: Volkswagen AG, 38436 Wolfsburg (DE)
(72) Erfinder: Kreipe, Bernhard, 30177 Hannover (DE); Speh, Jörg, 38104 Braunschweig (DE)
(74) Vertreter: Pfeuffer, Melanie

(57) **Zusammenfassung**

Verfahren zum Betreiben wenigstens einer Leuchtvorrichtung (10) eines Fahrzeugs (1), insbesondere eines Scheinwerfers und/oder eines Bodenprojektors des Fahrzeugs (1), zur Ausgabe einer Lichtverteilung (L1, L2) auf Grundlage eines, insbesondere in Echtzeit erzeugten, Lichtbilds (LB), welches wenigstens bereichsweise und bevorzugt vollständig von einer, insbesondere Prozessor- und/oder Controller-basierten,
Lichtbilderzeugungseinrichtung (30) des Fahrzeugs (1) in Abhängigkeit von wenigstens einer nicht-ortsaufgelösten Lichtbildgröße (LG), bevorzugt von einer Vielzahl nicht-ortsaufgelöster Lichtbildgrößen (LG), erzeugt wird, wobei die wenigstens eine Lichtbildgröße (LG) charakteristisch ist für wenigstens einen Bereich des zu erzeugenden Lichtbilds (LB), bevorzugt für das gesamte zu erzeugende Lichtbild. Erfindungsgemäß empfängt die Lichtbilderzeugungseinrichtung (30) zur wenigstens bereichsweisen Erzeugung des Lichtbilds von einer, von ihr beabstandeten, insbesondere Prozessor- und/oder Controller-basierten, Lichtbildgrößen-Ermittlungseinrichtung (20) des Fahrzeugs (1) die wenigstens eine Lichtbildgröße (LG).

## Beschreibung

Die vorliegende Erfindung bezieht sich auf ein Verfahren zum Betreiben wenigstens einer Leuchtvorrichtung eines Fahrzeugs, insbesondere eines Scheinwerfers und/oder eines Bodenprojektors des Fahrzeugs, zur Ausgabe einer Lichtverteilung auf Grundlage eines, insbesondere in Echtzeit erzeugten, Lichtbilds sowie eine Leuchtvorrichtung, insbesondere einen Scheinwerfer und/oder einen Bodenprojektor, für ein Fahrzeug. Die vorliegende Erfindung bezieht sich weiterhin auf ein Fahrzeug umfassend eine Leuchtvorrichtung sowie eine Anordnung einer Leuchtvorrichtung und eine, insbesondere Prozessor- und/oder Controller-basierte, Lichtbildgrößen-Ermittlungseinrichtung zur Ermittlung wenigstens einer Lichtbildgröße und zur Übermittlung der wenigstens einen Lichtbildgröße an die Leuchtvorrichtung bzw. an einer Lichtbilderzeugungseinrichtung der Leuchtvorrichtung zur Erzeugung des Lichtbilds.

Aktuell werden hochaufgelöste Scheinwerfer pixelbasiert, d.h. per Video-Streaming, von einem externen Steuergerät angesteuert. Dieses beinhaltet den Algorithmus zur Bilderzeugung auf Basis von Sensordaten als auch das Rendering für die Berechnung der Einzelbilder. Durch das Video-Streaming steigt der Bandbreitenbedarf direkt proportional zur Auflösung. Kostengünstige Netzwerktechnologien können daher nur bei geringen Auflösungen eingesetzt werden.

Aus der US 2018/0334086 A1 ist ein Verfahren zum Betreiben von mindestens einem Scheinwerfer eines Fahrzeuges und zur scheinwerferspezifischen Anpassung von mindestens einer scheinwerferunspezifischen Lichtbildinformation einer Schnittstellenvorrichtung (und/oder einer zentralen Steuerungsvorrichtung) des Fahrzeuges bekannt. Dabei wird beschrieben, dass die Lichtbildinformation beispielsweise eine Lichtverteilung im Raum, zum Beispiel auf einer 10 m Wand, umfasst. Solche Informationen sind beispielsweise physikalisch messbare Werte und/oder (pixelunabhängige) Helligkeitswerte bzw. die Beleuchtungsstärke und/oder die Farbe der gewünschten Lichtverteilung. Eine Verarbeitungsvorrichtung wandelt die Lichtbildinformation in eine scheinwerferspezifische Information anhand von mindestens einem scheinwerferspezifischen Parameter um. Hierdurch wird der Vorteil erzielt, dass die Lichtalgorithmen scheinwerferunabhängig entwickelt werden können und somit für verschiedene Bauarten von Scheinwerfern ohne umfangreiche Modifikationen eingesetzt werden.

Aus der US 2002/0156559 A1 ist eine Steuerung eines Fahrzeugscheinwerfers auf Grundlage von einem von einem Bildfeldsensor erhaltenen Bild einer Szene bekannt. Dabei wird das Vorsehen eines ersten Prozessors, welcher in einer Spiegelblende montiert sein kann, und eines zweiten Prozessors, welcher auf einer Leiterplatte in der Spiegelhalterung montiert sein kann, vorgeschlagen. Der zweite Prozessor kann die Bilddaten beim Einlesen empfangen und verarbeiten und das Verarbeitungsergebnis dem ersten Prozessor zur weiteren Verarbeitung weiterleiten. Durch die Aufteilung der Verarbeitungsleistung kann der erste Prozessor andere Verarbeitungsaufgaben wie die Steuerung der Reflektivität des Spiegels durchführen.

Ein dezentraler Ansatz, in welchem ein Steuergerät in jeder Leuchte verortet ist und in welchem eine Ansteuerung mittels signalbasierter Kommunikation über einen einfachen Fahrzeugbus (CAN) erfolgt, erfordert hohe Kosten, da ein Steuergerät pro Leuchte benötigt wird. Weiter nachteilig weist dieser Ansatz eine aufwendigere Synchronisation und eine sehr eingeschränkte Updatefähigkeit auf, insbesondere für Function-on-Demand / Online-Remote-Update.

Bei einem zentralen Ansatz mit einer Ansteuerung von einem externen Steuergerät per unkomprimiertem Video-Streaming steigen nachteilig die Kosten für Netzwerktechnologie mit der Auflösung der Leuchte an. Weiter nachteilig ergibt sich eine hohe Latenz für die Bildübertragung.

Bei einem zentralen Ansatz mit einer Ansteuerung von einem externen Steuergerät per Video-Streaming mit Kompression ist nachteilig der Kompressionsfaktor begrenzt, insbesondere bei verlustfreier Kompression. Für hohe Kompressionsraten wird eine große Rechenleistung zur Dekomprimierung in der Leuchte benötigt. Weiter ergibt sich eine moderate Latenz für die Bildübertragung.

Der vorliegenden Erfindung liegt die Aufgabe zugrunde, die aus dem Stand der Technik bekannten Nachteile zu überwinden und eine Leuchtvorrichtung sowie ein Verfahren zum Betreiben einer Leuchtvorrichtung bereitzustellen, welche eine möglichst kosteneffiziente Erfüllung einer hochaufgelösten Lichtfunktion durch die Leuchtvorrichtung bei gleichzeitig möglichst geringer Latenz bieten.

Die Aufgabe wird erfindungsgemäß durch die Gegenstände der unabhängigen Ansprüche gelöst. Vorteilhafte Ausführungsformen und Weiterbildungen der Erfindung sind Gegenstand der Unteransprüche.

Bei einem erfindungsgemäßen Verfahren zum Betreiben wenigstens einer Leuchtvorrichtung eines Fahrzeugs, insbesondere eines Scheinwerfers und/oder eines Bodenprojektors des Fahrzeugs, zur Ausgabe einer Lichtverteilung auf Grundlage eines, insbesondere in Echtzeit, erzeugten (insbesondere ortsaufgelösten) Lichtbilds.

Die Leuchtvorrichtung weist bevorzugt mehrere Pixel zur Lichtausstrahlung auf, um eine variable (auszugebende) Lichtverteilung zu erzielen. Hierzu lassen sich die Pixel der Leuchtvorrichtung jeweils einzeln in Abhängigkeit von bestimmten Ansteuerparametern, wie z.B. einer Helligkeit und/oder eines Farbwerts des Pixels, ansteuern.

Hierdurch können mit der Leuchtvorrichtung, beispielsweise einem Scheinwerfer, etwa neben einem Abblend- und Fernlicht noch weitere Lichtfunktionen, wie z. B. ein Kurvenlicht oder ein blendfreies Fernlicht, realisiert werden.

Ein Pixel ist insbesondere die kleinste ansteuerbare optische Einheit der Leuchtvorrichtung, um eine Veränderung der von der Leuchtvorrichtung auszugebenden und/oder ausgegebenen Lichtverteilung zu erzielen. Dabei kann der Pixel beispielsweise als jeweils ein einzelnes Leuchtmittel (wie beispielsweise eine einzelne Lichtquelle), etwa eine LED (light-emitting diode) und/oder ein Pixel einer segmentierten LED (Mikropixel-LED) und/oder als ein Mikrospiegel und/oder als ein Display bzw. ein Pixel eines reflektiven oder transmittiven Flüssigkristalldisplays (LCD, LCoS), und/oder als ein Shutter und/oder als eine Blende und/oder als eine optische Vorrichtung zur Modifizierung und/oder Veränderung und/oder Absorption einzelner Lichtstrahlen ausgeführt sein. Dies hat den Vorteil, dass die Lichtverteilung variabel einstellbar ist und verschiedene Lichtfunktionen realisiert werden können.

Bei der Leuchtvorrichtung handelt es sich bevorzugt um eine hochaufgelöste Leuchtvorrichtung, d.h. eine Leuchtvorrichtung mit mehr als 1.000 Pixel, bevorzugt mehr als 4.000 Pixeln (bevorzugt wenigstens 10.000 Pixeln) zur pixelindividuell steuerbaren Lichtabstrahlung (durch Leuchtmittel, wie beispielsweise Lichtquellen). Dies bietet den Vorteil, dass derartige hochaufgelöste Leuchtvorrichtungen hochaufgelöste Lichtfunktionen realisieren können (d.h. bei deren Umsetzung mehr als 1.000 Pixel, bevorzugt mehr als 4.000 Pixel, bevorzugt wenigstens 10.000 Pixel, der Leuchtvorrichtung insbesondere zeitgleich verwendet werden).

Bevorzugt weist die Leuchtvorrichtung wenigstens 10.000 Pixel, bevorzugt wenigstens 15.000 Pixel, besonders bevorzugt wenigstens 25.000 Pixel auf. Besonders gut einsetzbar ist das vorgeschlagene Verfahren bei Leuchtvorrichtungen mit noch höheren Pixelzahlen, wie beispielsweise wenigstens 100.000 Pixel.

Ein Beispiel für eine derartige hochaufgelöste Lichtfunktion ist ein adaptives Frontlicht (Maskierung), in welchem bevorzugt ein Leuchtweitenregulator gesteuert wird und/oder bei welchem in Abhängigkeit eines (insbesondere durch eine Kamera des Fahrzeugs erfassten) erkannten Gegenverkehrs und/oder vorausfahrenden Fahrzeugs eine Lichtverteilung (der von der Leuchtvorrichtung, insbesondere dem Scheinwerfer, ausgegebenen Lichtverteilung) verändert wird. Insbesondere wird die Lichtverteilung maskiert, d.h. die Lichtstärke mindestens in einem Teilbereich wird verändert und/oder reduziert. Sobald kein Verkehrsteilnehmer mehr erkannt wird, schaltet das Licht wieder "gleitend" auf Fernlicht.

Ein weiteres Beispiel für eine derartige hochaufgelöste Lichtfunktion ist ein adaptives Frontlicht (Schilderblendsteuerung bzw. Schilderblendschutz), in welchem eine Beleuchtung erkannter Verkehrsschilder angepasst wird, um etwa eine durch Reflexion des ausgegebenen Lichts an dem Verkehrsschild hervorgerufene Blendung des Fahrers zu verhindern.

Ein weiteres Beispiel für eine derartige hochaufgelöste Lichtfunktion ist ein Fahrspurlicht ("lane light"), in welchem ein zu befahrender Bereich der Fahrspur (in der Form eines Lichtteppichs) ausgeleuchtet wird.

Ein weiteres Beispiel für eine derartige hochaufgelöste Lichtfunktion ist ein dynamisches Kurvenlicht, bei welchem eine Lichtverteilung abhängig von der Straßenkrümmung mitgeschwenkt wird.

Ein weiteres Beispiel für eine derartige hochaufgelöste Lichtfunktion ist ein Fahrspurwechsel-Warnlicht ("Side Assist"), in welchem vor einem sich an einer benachbarten Fahrbahn insbesondere von hinten annäherndem Verkehrsteilnehmer (etwa bei erkannter Absicht eines Fahrspurwechsels, etwa bei erkannter Betätigung des Fahrspurwechselanzeigers) gewarnt wird. Eine solche Warnung kann etwa durch Ausgabe eines Warnlichts in Form einer (durchgezogenen) Fahrspurbegrenzung zwischen der Fahrspur des Fahrzeugs und der Fahrspur des sich von hinten annähernden Fahrzeugs erfolgen.

Ein weiteres Beispiel für eine derartige hochaufgelöste Lichtfunktion ist ein Orientierungslicht etwa zur Anzeige der Fahrzeugbreite in einer Engstelle, z.B. eines Baustellenbereichs, in welchem etwa durch auf die Straße ausgegebenes Licht die Breite und Position des Fahrzeuges (etwa durch zwei parallele linienförmige Lichtabschnitte) hervorgehoben wird.

Ein weiteres Beispiel für eine derartige hochaufgelöste Lichtfunktion ist ein Markierungslicht, mit dem der Fahrer auf eine kritische Situation am Fahrbahnrad aufmerksam gemacht wird, etwa einen oder mehrere Fußgänger, durch deren bzw. dessen (vergleichsweise intensivere) Beleuchtung.

Bevorzugt ist die von der Leuchtfunktion zu erfüllende Lichtfunktion (wenigstens zeitweise) von dem Fahrzeugumfeld abhängig (wie in den obig genannten Beispielen). Bevorzugt erfasst eine Sensoreinrichtung des Fahrzeugs zur Erfassung des Fahrzeugumfelds das Fahrzeugumfeld.

Bevorzugt ist die Sensoreinrichtung zur Erfassung eines Fahrzeugumfelds ausgewählt aus einer Gruppe von Sensoren, welche eine (Farb-)Kamera, eine Frontkamera, eine Rückkamera, einen Infrarot-Kamera, LIDAR (Abkürzung für Light detection and ranging oder Light imaging, detection and ranging), Radar, Ultraschallsensoren und dergleichen sowie Kombinationen hiervon umfasst. Bevorzugt erzeugt die Sensoreinrichtung zur Erfassung eines Fahrzeugumfelds örtlich aufgelöste (insbesondere 2D- und/oder 3D-) Sensordaten (von einem Fahrzeugumfeld des jeweiligen Fahrzeugs).

Bevorzugt wird die Lichtfunktion in Abhängigkeit der erfassten Sensordaten ausgeführt.

Zur Durchführung der Ansteuerung der einzelnen Leuchtmittel (z.B. der einzelnen Lichtquellen) bzw. der Pixel und zur Bestimmung der hierzu notwendigen Steuerungsinformationen, z. B. der Helligkeitswerte und/oder Farbwerte je Pixel (bzw. Leuchtmittel), kommen (Licht-)Algorithmen zum Einsatz. Es werden dabei die Lichtverteilung und/oder der Helligkeitswert und/oder Farbwert und/oder die Steuerungsinformationen für jedes einzelne Leuchtmittel der Leuchtvorrichtung bzw. für jeden einzelnen Pixel der Leuchtvorrichtung berechnet.

Bevorzugt wird zu einer, von der Leuchtvorrichtung zu erfüllenden (vorgegebenen und/oder - etwa von einem Nutzer des Fahrzeugs - vorgebbaren) Lichtfunktion ein bzw. das zur Erfüllung der Lichtfunktion erforderliches (ortsaufgelöste) Lichtbild ermittelt.

Bevorzugt wird das Lichtbild auf Grundlage von (durch wenigstens einer Sensoreinrichtung des Fahrzeugs erfassten) Sensordaten ermittelt bzw. berechnet.

Bei dem Lichtbild handelt es sich insbesondere um ein ortsaufgelöstes Lichtbild, welches insbesondere charakteristisch ist für eine zur Erfüllung der Lichtfunktion geeignete Lichtverteilung. Das Lichtbild kann etwa eine Lichtverteilung angeben, welche zur Erfüllung der Lichtfunktion geeignet (und bestimmt bzw. ermittelt wurde).

So kann etwa das (ortsaufgelöste) Lichtbild angeben, welche Umgebungsbereiche bzw. welche Fahrbahnbereiche und/oder Fahrspurbereiche mit welchen Farbwerten und/oder Helligkeitswerten zu beleuchten sind.

Das Lichtbild ist insbesondere ortsaufgelöst, als es bevorzugt eine räumliche und/oder flächige Lichtverteilung und/oder eine Zuordnung von Farb- und/oder Helligkeitswerten zu einer Vielzahl an (räumlich oder in einer Ebene angeordneter) Positionen angibt. Insbesondere weist das Lichtbild bereits für eine Vielzahl an Positionen einen jeweiligen Farb- und/oder Helligkeitswert auf.

Das Lichtbild gibt bevorzugt die zur Erfüllung der Lichtfunktion auszugebenden Farb- und/oder Helligkeitsverläufe der Lichtverteilung konkret ortsaufgelöst an. Unter "konkret angeben" wird insbesondere verstanden, dass diese nicht erst etwa durch Berechnung über eine Funktion oder eine Rechenvorschrift erhalten werden können, sondern dass konkrete Farb- und/oder Helligkeitswerte angegeben sind.

Das Lichtbild weist also bevorzugt eine ortsaufgelöste Darstellung der Farb- und/oder Helligkeitswerte auf.

Dabei kann das Lichtbild unabhängig von der (konkreten Hardware der) Leuchtvorrichtung ermittelt sein. Beispielsweise kann das Lichtbild unabhängig von der genauen Anzahl der Pixel und/oder (räumliche) Anordnung der Pixel, die durch die Leuchtvorrichtung bereitgestellt werden, sein. So können auf Grundlage des Lichtbilds Werte für die Ansteuerparameter (der einzelnen Pixel) der Leuchtvorrichtung ermittelt werden. Dies bietet den Vorteil, dass das Lichtbild unabhängig von einer spezifischen Ausstattung der Leuchtvorrichtung ermittelt werden kann. Das Lichtbild kann insbesondere ausschließlich in Abhängigkeit von der zu erfüllenden Lichtfunktion ermittelt werden.

Das Lichtbild kann dabei eine höhere oder eine geringere Auflösung als die Leuchtvorrichtung (Anzahl der Pixel) aufweisen. Denkbar ist, dass die Werte für die Ansteuerparameter (der einzelnen Pixel) der Leuchtvorrichtung, wie etwa Helligkeits- und/oder Farbwerte, durch Mittelung (etwa wenn die Auflösung des Lichtbilds höher ist als die Anzahl der Pixel der Leuchtvorrichtung) und/oder Interpolation (etwa wenn die Auflösung des Lichtbilds geringer ist als die Anzahl der Pixel der Leuchtvorrichtung) ermittelt werden. Denkbar ist auch, dass bei der Ermittlung der Werte für die Ansteuerparameter wenigstens eine oder mehrere optische Eigenschaften der Leuchtvorrichtung (etwa Brechungseigenschaft und/oder Linseneigenschaft und/oder Abbildungseigenschaft und/oder eine Alterung eines oder mehrerer Leuchtmittel, wie beispielsweise mehrere Lichtquellen,) berücksichtigt wird/werden.

Das Lichtbild kann beispielsweise eine Helligkeits- und/oder Farbverteilung angeben, welche sich durch Ausgabe der zur Erfüllung der Lichtfunktion geeigneten und/oder bestimmten und/oder ermittelten Lichtverteilung auf eine vorgegebene Fläche, etwa auf eine senkrechte Wand (in vorgegebenem Abstand zur Leuchtvorrichtung und bei vorgegebener Orientierung, insbesondere der Orientierung der Leuchtvorrichtung, welche diese in dem Fahrzeug in eingebautem Zustand aufweist) ergibt.

Denkbar ist aber auch, dass das Lichtbild die (zur Erfüllung der Lichtfunktion geeignete und/oder bestimmte und/oder ermittelte) Lichtverteilung in einem Bereich der Leuchtvorrichtung (etwa in einem Bereich der Leuchtvorrichtung, in welchem die Leuchtmittel (z.B. Lichtquellen) bzw. die Pixel angeordnet sind) angibt.

Das Lichtbild kann insbesondere eine flächige und/oder eine räumliche Lichtverteilung beschreiben bzw. angeben.

Das Lichtbild wird wenigstens bereichsweise und bevorzugt vollständig von einer, insbesondere Prozessor- und/oder Controller-basierten, Lichtbilderzeugungseinrichtung des Fahrzeugs in Abhängigkeit von wenigstens einer nicht-ortsaufgelösten Lichtbildgröße, bevorzugt von einer Vielzahl nicht-ortsaufgelöster Lichtbildgrößen, erzeugt bzw. berechnet (insbesondere in einem Computer-implementierten Verfahrensschritt).

Unter "nicht-ortsaufgelöst" wird in diesem Zusammenhang insbesondere verstanden, dass noch keine konkrete Zuordnung, insbesondere keine "eins-zu-eins-Zuordnung" zwischen einer Position/bzw. einem Ort und einer Lichtverteilungsgröße wie einem Helligkeits- und/oder Farbwert, angegeben ist.

Dabei ist die wenigstens eine Lichtbildgröße charakteristisch für wenigstens einen Bereich des zu erzeugenden Lichtbilds, bevorzugt für das gesamte zu erzeugende Lichtbild. So kann das Lichtbild aus der wenigstens einen Lichtbildgröße, bevorzugt der Vielzahl von Lichtbildgrößen, ableitbar sein (insbesondere ohne dass weitere für die zur Erfüllung der Lichtfunktion zu erzeugende Lichtverteilung charakteristische Größen, welche bevorzugt unabhängig von der Leuchtvorrichtung sind, erforderlich sind).

So könnte etwa die Lichtbildgröße eine Vorschrift angeben, auf welche Weise das Lichtbild erzeugt bzw. berechnet werden kann. So könnte etwa die Lichtbildgröße angeben, welcher Fahrbahn- und/oder Fahrspurbereich in welcher Form mit welchem Farbverlauf auszuleuchten und/oder zu beleuchten ist, ohne jedoch ortsaufgelöste Farb- und/oder Helligkeitswerte anzugeben.

So könnten etwa geometrische Konturen durch die Lichtbildgröße(n) angegeben sein und/oder diese hierfür charakteristisch sein, wobei durch die geometrische Kontur (jeweils) ein (geometrischer) Bereich des zu erzeugenden Lichtbilds vorgegeben ist, in welchem das Lichtbild gemäß einer einheitlichen Beleuchtungsvorschrift zu erzeugen ist. Bevorzugt unterscheidet sich die (einheitliche) Beleuchtungsvorschrift von wenigstens einer weiteren Beleuchtungsvorschrift, besonders bevorzugt von einer Vielzahl von weiteren Beleuchtungsvorschriften, mittels welcher bzw. mittels welchen wenigstens ein anderer Bereich des Lichtbilds erzeugt wird.

Bei der Beleuchtungsvorschrift kann es sich beispielsweise um eine homogene Beleuchtung/Ausleuchtung/Lichtausgabe mit insbesondere gleicher Intensität bzw. gleicher Helligkeits- und/oder Farbwert handeln. Es kann sich aber auch um einen vorgegebenen Helligkeits- und/oder Farbverlauf handeln (deren Werte sich etwa in Abhängigkeit der Position nach einer vorgegebenen Funktion in einem vorgegebenen Wertebereich ändern).

So könnten etwa geometrische Konturen Begrenzungen eines (etwa einheitlich und/oder verstärkt und/oder vermindert) auszuleuchtenden Bereichs vorgeben, wie etwa des obig genannten Lichtteppichs und/oder eines zu beleuchtenden Verkehrsschildes und/oder zur Entblendung von Schildern.

So können die Lichtbildgrößen eine Ausgestaltung eines Randes (harter Rand, weicher Rand) eines ausgegebenen Lichtobjekts, eine Ausgestaltung einer Hell-Dunkel-Grenze bzw. eines Hell-Dunkel-Grenzbereichs, eine Ausgestaltung eines Übergangs zwischen wenigstens zwei nebeneinander angeordneten und/oder übereinander angeordneten Lichtobjekten, eine Ausgestaltung eines Auslaufs einer auszugebenen Lichtverteilung, ein Shading, eine Größenangabe (Länge- und/oder Breite) eines auszugebenden Lichtobjekts bzw. Lichtverteilung, eine Skalierung eines auszugebenden Lichtobjekts, einen Gradient einer Helligkeits- und/oder Farbverteilung angeben. Bei einem Lichtobjekt kann es sich beispielsweise um eine geometrische Form handeln, welches etwa auf einen Fahrbahnbereich (etwa durch Beleuchtung und/oder Projektion mittels der Leuchtvorrichtung) ausgegeben (also beleuchtet und/oder auf diesen projiziert) werden soll. Eine Lichtbildgröße kann weiter eine Textur (Art der Helligkeits- und/oder Farbverteilung innerhalb der Kontur, etwa Schraffur, einheitliche Helligkeit- und/oder Farbwerte, Farbverlauf und/oder Helligkeitsverlauf innerhalb der Kontur) angeben.

Denkbar ist auch, dass die Lichtbildgröße(n) die Position und/oder Typ und/oder geometrischen Angaben (Breite, Höhe) und/oder Bewegungsgrößen (Geschwindigkeit, Beschleunigung) eines in dem Fahrzeugumfeld des Fahrzeugs erkannten Objekts, von welcher eine Erfüllung einer von der Leuchtvorrichtung zu erfüllenden Lichtfunktion abhängt, angeben.

So kann beispielsweise Position eines Gegenverkehrs, die Fahrzeugart und eine Geschwindigkeit des Gegenverkehrs angeben, so dass eine Aussparung (entsprechen einer vorgegebenen Form) des Gegenverkehrs von dem, von einem Fernlicht ausgeleuchteten Umfeldbereich, (dynamisch) ermittelt werden kann.

Denkbar ist auch, dass die Lichtbildgröße(n) die Position und geometrischen Angaben (Breite, Höhe) eines zu markierenden und/oder zu beleuchtenden (im Fahrzeugumfeld erkannten) Verkehrsschildes und/oder zu markierenden Objekten, wie etwa eine Fahrspurbegrenzung, angibt.

Bevorzugt gibt zudem eine Leuchtgröße eine geometrische Form einer auf der Fahrbahn auszugebenden Lichtverteilung (etwa asymmetrische Form eines Fernlichts) bzw. hierfür charakteristische Größen an.

Erfindungsgemäß empfängt die Lichtbilderzeugungseinrichtung zur wenigstens bereichsweisen Erzeugung des Lichtbilds von einer, von ihr beabstandeten, insbesondere Prozessor- und/oder Controller-basierten, Lichtbildgrößen-Ermittlungseinrichtung des Fahrzeugs die wenigstens eine Lichtbildgröße (und bevorzugt die Vielzahl von Lichtbildgrößen).

Mit anderen Worten wird ein Verfahren zur Leuchtenansteuerung mit ausgelagerter Erzeugung von Lichtbildern (Edge-Leuchtbild-Erzeugung) vorgeschlagen. Hierdurch wird vorteilhaft eine Verortung auf zwei unabhängigen Recheneinrichtungen erreicht.

Bevorzugt ist bzw. wird die wenigstens eine Lichtbildgröße durch eine (nachfolgend näher beschriebene), insbesondere Prozessor- und/oder Controller-basierte, Lichtbildgrößen-Ermittlungseinrichtung (des Fahrzeugs) ermittelt.

Bevorzugt erfolgt die Erzeugung des Lichtbilds in zwei Schritten, welche auf zwei unabhängigen Recheneinrichtungen durchgeführt werden. Bevorzugt wird in einem ersten Schritt die wenigstens eine Lichtbildgröße bzw. die Vielzahl an Lichtbildgrößen ermittelt. Bevorzugt in dem zweiten Schritt aus den Lichtbildgrößen das Lichtbild ermittelt.

Bevorzugt erfolgt die Unterteilung der beiden Schritte derart, dass die Datenmenge der zur Erzeugung des Lichtbilds erforderlichen wenigstens einen Lichtbildgröße und/oder der Vielzahl an Lichtbildgrößen kleiner, bevorzugt um einen Faktor 10, bevorzugt wenigstens einen Faktor 100, bevorzugt wenigstens einen Faktor 1000 kleiner, ist als die Datenmenge des erzeugten Lichtbilds.

Bevorzugt erfolgt die Unterteilung der beiden Schritte derart, dass die Datenmenge der zur Erzeugung des Lichtbilds erforderlichen wenigstens einen Lichtbildgröße und/oder der Vielzahl an Lichtbildgrößen unabhängig von der Anzahl der Pixel der Leuchtvorrichtung ist.

Insbesondere ist die wenigstens eine Lichtbildgröße bzw. die Vielzahl von Lichtbildgrößen derart gewählt, dass sie unabhängig von der Auflösung des zu erzeugenden Lichtbilds von der Anzahl der Pixel der Leuchtvorrichtung ist/sind.

Hierdurch kann vorteilhaft für die Übertragung der Lichtbildgröße(n) eine Kommunikationseinrichtung mit geringerer Bandbreite eingesetzt werden.

Eine Reduktion des Bandbreitenbedarfs ermöglicht den Einsatz kostengünstiger Fahrzeugnetzwerke.

Weiter vorteilhaft besteht durch die Übertragung der Lichtbildgröße(n) anstelle des zu erzeugenden Lichtbilds keine Abhängigkeit von der Auflösung.

Durch die hierdurch erreichte Latenzreduktion werden schnelle Kompensationsalgorithmen, z.B. für Anwendungen der Bildstabilisierung ermöglicht.

Bei einem bevorzugten Verfahren umfasst die Leuchtvorrichtung die Lichtbilderzeugungseinrichtung. Bevorzugt ist die Lichtbilderzeugungseinrichtung innerhalb eines Gehäuses oder am Gehäuse der Leuchtvorrichtung angeordnet. Die Lichtbilderzeugungseinrichtung kann unmittelbar am Gehäuse der Leuchtvorrichtung befestigt sein und/oder das Gehäuse der Leuchtvorrichtung berühren. Dies bietet den Vorteil, dass das von der Lichtbilderzeugungseinrichtung erzeugte Lichtbild nicht mehr quer durch das Fahrzeug zur Leuchtvorrichtung übertragen werden muss, sondern direkt zur Ansteuerung der Pixel der Leuchtvorrichtung genutzt werden kann. Hierdurch sind vorteilhaft Kommunikationseinrichtungen mit zur Übertragung des Lichtbilds ausreichender Bandbreite entbehrlich.

Bevorzugt bildet die Lichtbilderzeugungseinrichtung zusammen mit der Leuchtvorrichtung eine bauliche Einheit, welche insbesondere als gemeinsame bauliche Einheit montierbar und/oder austauschbar ist. Bevorzugt ist die Lichtbildgrößen-Ermittlungseinrichtung nicht Teil dieser baulichen Einheit.

Bevorzugt stellt die Lichtbilderzeugungseinrichtung einen Netzwerkknoten (beispielsweise einen Endpunkt) eines (insbesondere Ethernet-basierten)Kommunikationsnetzwerks des Fahrzeugs dar.

Bei einem weiter bevorzugten Verfahren erzeugt die Lichtbilderzeugungseinrichtung auf Grundlage der wenigstens einen Lichtbildgröße und bevorzugt auf Grundlage der Vielzahl von Lichtbildgrößen den Bereich des Lichtbilds und bevorzugt das gesamte Lichtbild durch Rendern. Dies bietet den Vorteil, dass die Rendering-Schritte, welche ortsaufgelöste Daten erzeugen und in Abhängigkeit der Auflösung eine hohe Datenmenge erzeugen, von einer Recheneinrichtung bei der Leuchtvorrichtung durchgeführt werden.

Diejenigen (rechenintensiven) Rechenschritte, welche allerdings noch nicht von der Auflösung abhängige Datenmengen generieren können dagegen von einer Recheneinrichtung an einer anderen Stelle des Fahrzeugs durchgeführt werden. So kann etwa für diese Rechenschritte eine Recheneinrichtung genutzt werden, welche auch andere Datenverarbeitungsschritten anderer Fahrzeugfunktionen durchführt, so dass keine eigene Recheneinrichtung mit erforderlicher Prozessorleistung hierfür erforderlich ist.

Bevorzugt wird wenigstens ein Rendering-Schritt und besonders bevorzugt werden alle zur Erzeugung des Lichtbilds erforderlichen Rendering-Schritte von der Lichtbilderzeugungseinrichtung durchgeführt.

Mit anderen Worten wird ein Verfahren zur Leuchtenansteuerung mit ausgelagertem Rendering zur Erzeugung von Lichtbildern (Edge-Rendering) vorgeschlagen.

Bei einem weiter bevorzugten Verfahren ist die wenigstens eine Lichtbildgröße und bevorzugt die Vielzahl an Lichtbildgrößen für eine geometrische Beschreibung des zu erzeugenden Lichtbilds charakteristisch. Bevorzugt sind die Lichtbildgrößen derart gewählt, dass das zu erzeugende Lichtbild in Abhängigkeit dieser (insbesondere ausschließlich) durch Renderingschritte erzeugbar ist.

So kann etwa das zu erzeugende Lichtbild in (geometrisch einfache) Lichtobjekte zerlegt werden, welche geometrisch einfach zu beschreiben sind (und daher mit Größen geringer Datenmenge beschreibbar sind). Bevorzugt werden Bereiche des zu erzeugenden Lichtbilds zusammengefasst und mittels eines einzigen (geometrischen) (Licht-)Objekts beschrieben.

Bei einem geometrischen (Licht-)Objekt kann es sich etwa um Dreiecke, Rechtecke, Quadrate, Kreise, Trapeze und dergleichen handeln.

Bei einem weiter bevorzugten Verfahren ermittelt die Lichtbildgrößen-Ermittlungseinrichtung wenigstens ein Szeneobjekt (bzw. Lichtobjekt) und/oder Szeneelement und bevorzugt eine Vielzahl von Szeneobjekte (bzw. Lichtobjekt) und/oder Szeneelemente zur Erzeugung des Lichtbilds und/oder zur Erzeugung der wenigstens einen Lichtbildgröße und bevorzugt der Vielzahl von Lichtbildgrößen.

Vorteilhaft wird hierdurch eine Trennung von Algorithmus zur Szenenberechnung und Rendering des Lichtbilds erreicht und eine Verortung auf zwei unabhängige Recheneinheiten, die über ein Fahrzeugnetzwerk verbunden sind, ermöglicht.

Bei einer Szene kann es sich insbesondere um ein virtuelles räumliches Modell handeln, in welchem eine zur Erfüllung der Lichtfunktion ermittelte Lichtverteilung und/oder die Fahrbahn und/oder Fahrspur, Objekte aus dem Fahrzeugumfeld (insbesondere deren Materialeigenschaften, Lichtquellen), sowie die Position und Lichtausgaberichtung der Leuchtvorrichtung (oder der Leuchtvorrichtungen des Fahrzeugs) und/oder zu markierende Umfeldbereiche und/oder Umfeldobjekte angegeben sind.

Denkbar ist auch eine abweichende Splittung von Algorithmus- und Rendering-Komponenten, z.B. eine Teilverortung von Algorithmus-Komponenten in der Leuchte. Hierdurch wird vorteilhaft eine lose Kopplung zwischen Algorithmus und Rendering erreicht.

Die Berechnung des Lichtbilds in der Leuchte bzw. in der Leuchtvorrichtung erfolgt vorzugsweise per Software-Rendering auf einem Mikrokontroller (MCU), System-on-Chip (SoC) oder ASIC.

Denkbar ist auch eine Berechnung des Renderings auf Graphikprozessor (GPU) /Mikroprozessor (MPU). Ein Softwarerendering auf MCU/SoC ist vergleichsweise die kostengünstigste und flexibelste Lösung.

Bei einem weiter bevorzugten Verfahren ist die wenigstens eine Lichtbildgröße und bevorzugt die Vielzahl an Lichtbildgrößen jeweils charakteristisch ist für ein Kommando zur Erzeugung eines Szeneobjekts und/oder für eine Kommandoliste zur Erzeugung einer Szene. Vorteilhaft kann damit eine Übertragung der Bildinhalte zwischen den Recheneinheiten per Kommandoliste über ein Fahrzeugnetzwerk ermöglicht werden.

Dazu werden bevorzugt in einem externen/zentralen Steuergerät die Szenenelemente (Objekte) berechnet und über eine Schnittstelle als Kommandoliste via Fahrzeugbus (z.B. 10 MBit-Ethernet) zur Leuchte übertragen. In der Leuchte wird das Lichtbild aus den Objekten berechnet (gerendert). Damit kann das Lichtbild mit geringem Bandbreitenbedarf und insbesondere unabhängig von der Auflösung übertragen werden.

Bevorzugt wird eine Kommandoliste in einem (gemeinsamen) Datenpaket über das Fahrzeugnetzwerk übertragen.

Bei einem weiter bevorzugten Verfahren wird bzw. werden die wenigstens eine Lichtbildgröße und bevorzugt die Vielzahl an Lichtbildgrößen, besonderes bevorzugt die für eine Kommandoliste zur Erzeugung einer Szene charakteristischen Daten, über ein Fahrzeugnetzwerk, bevorzugt über einen Fahrzeugbus, zur Lichtbilderzeugungseinrichtung übertragen.

Bevorzugt werden die Lichtbildgröße(n) über eine Kommunikationseinrichtung zur Lichtbilderzeugungseinrichtung übertragen, welche wenigstens abschnittsweise (denkbar wäre auch über die gesamte Verbindung hinweg) eine Bandbreite von 10 MBit/s, bevorzugt 100 MBit/s nicht überschreitet. Bevorzugt werden alle zur Erzeugung des Lichtbilds zu übertragenden Lichtbildgrößen an die Lichtbilderzeugungseinrichtung mit einer Kommunikationseinrichtung übermittelt, welche wenigstens abschnittsweise eine Bandbreite von 10 MBit/s, bevorzugt 100 MBit/s, nicht überschreitet.

Bevorzugt wird die wenigstens eine Lichtbildgröße und bevorzugt werden alle zur Erzeugung des, insbesondere in Echtzeit zu erzeugenden, Lichtbilds zu übertragenden Lichtbildgrößen (insbesondere als gemeinsames, bevorzugt von der Lichtbildgrößen-Ermittlungseinrichtung zur Übermittlung bereitgestelltes, Datenpaket) mit einer Datenrate an die Lichtbilderzeugungseinrichtung übertragen, welche 10 MBit/s und bevorzugt 100 MBit/s nicht überschreitet.

Die vorliegende Erfindung ist weiterhin gerichtet auf eine Leuchtvorrichtung, insbesondere einen Scheinwerfer und/oder einen Bodenprojektor, für ein Fahrzeug zur Ausgabe einer Lichtverteilung auf Grundlage eines, insbesondere in Echtzeit erzeugten, (ortsaufgelösten) Lichtbilds.

Dabei wird das Lichtbild wenigstens bereichsweise und bevorzugt vollständig von einer, insbesondere Prozessor- und/oder Controller-basierten, Lichtbilderzeugungseinrichtung der Leuchtvorrichtung in Abhängigkeit von wenigstens einer nicht-ortsaufgelösten Lichtbildgröße, bevorzugt von einer Vielzahl nicht-ortsaufgelöster Lichtbildgrößen, erzeugt.

Dabei ist die wenigstens eine Lichtbildgröße charakteristisch für wenigstens einen Bereich des zu erzeugenden Lichtbilds, bevorzugt für das gesamte zu erzeugende Lichtbild.

Erfindungsgemäß weist die Leuchtvorrichtung eine Schnittstelle zum Empfangen der wenigstens einen Lichtbildgröße und bevorzugt der Vielzahl von Lichtbildgrößen auf.

Es wird also auch im Rahmen der erfindungsgemäßen Leuchtvorrichtung vorgeschlagen, dass ein Teil der Datenverarbeitungsschritte zur Erzeugung des Lichtbilds von einer in Bezug auf die Leuchtvorrichtung externen Datenverarbeitungseinrichtung (insbesondere außerhalb der Leuchtvorrichtung) vorgenommen werden, während die Fertigstellung des Lichtbilds durch die Leuchtvorrichtung durchgeführt wird.

Auch hier wird damit vorteilhaft eine Verortung der Erzeugung des Lichtbilds auf zwei verschiedene Recheneinrichtungen vorgeschlagen.

Bevorzugt ist die Leuchtvorrichtung dazu eingerichtet, geeignet und/oder bestimmt, das obig beschriebene Verfahren sowie insbesondere alle bereits obig im Zusammenhang mit der Leuchtvorrichtung (bzw. der Lichtbilderzeugungseinrichtung) beschriebenen Verfahrensschritte einzeln oder in Kombination miteinander auszuführen. Umgekehrt kann das Verfahren mit allen im Rahmen der Leuchtvorrichtung beschriebenen Merkmalen einzeln oder in Kombination miteinander ausgestattet sein.

In einer bevorzugten Ausführungsform handelt es sich bei der Lichtbilderzeugungseinrichtung um eine Rendereinrichtung zur Durchführung wenigstens eines Rendervorgangs und bevorzugt zur Durchführung aller bei der Erzeugung des Lichtbilds vorzunehmender Render-Schritte. Auch hier wird damit vorteilhaft ein Edge-Rendering vorgeschlagen, also eine Leuchtenansteuerung mit ausgelagertem Rendering zur Erzeugung von Lichtbildern.

In einer weiter bevorzugten Ausführungsform ist die Lichtbilderzeugungseinrichtung ausgewählt aus einer Gruppe von Recheneinrichtungen, welche Mikrokontroller (MCU), System-on-Chip (SoC), ASICs (anwendungsspezifische integrierte Schaltungen, englisch "application-specific integrated circuit") und dergleichen sowie Kombinationen hiervon umfasst. Dies bietet den Vorteil, dass im Vergleich zu dem zentralen Steuergerät vergleichsweise kosteneffiziente Recheneinrichtungen für die Leuchtvorrichtung gewählt werden können.

Zusätzlich oder alternativ ist auch denkbar, dass die Lichtbilderzeugungseinrichtung ausgewählt ist aus einer Gruppe von Recheneinrichtungen, welche MPUs (Abkürzung für engl. "microprocessor unit", dt. Mikroprozessor), GPUs (Abkürzung für engl. "graphics processing unit", dt. Grafikprozessor), FPGAs (Akronym für "Field Programmable Gate Array", dt. "im Feld programmierbare (Logik-)Gatter-Anordnung") und dergleichen sowie Kombinationen hiervon umfasst.

Die vorliegende Erfindung ist weiterhin gerichtet auf eine Anordnung einer Lichtbilderzeugungseinrichtung einer obig beschriebenen Leuchtvorrichtung und einer, insbesondere Prozessor- und/oder Controller-basierten, Lichtbildgrößen-Ermittlungseinrichtung zur Ermittlung der wenigstens einen Lichtbildgröße, bevorzugt der Vielzahl an Lichtbildgrößen und zur Übermittlung der wenigstens einen Lichtbildgröße, bevorzugt der Vielzahl an Lichtbildgrößen an die Lichtbilderzeugungseinrichtung.

Erfindungsgemäß ist die Lichtbildgrößen-Ermittlungseinrichtung außerhalb der Leuchtvorrichtung und/oder in Bezug auf die Leuchtvorrichtung extern und/oder beabstandet zur Lichtbilderzeugungseinrichtung (und/oder beabstandet zur Leuchtvorrichtung) angeordnet. Denkbar ist beispielsweise, dass die Lichtbildgrößen-Ermittlungseinrichtung durch eine drahtgebundene Kommunikationseinrichtung mit der Lichtbilderzeugungseinrichtung verbunden ist, deren Länge mindestens 1 m, bevorzugt mindestens 2 m, bevorzugt 5 m überschreitet. Bevorzugt ist die Lichtbildgrößen-Ermittlungseinrichtung außerhalb eines Gehäuses der Leuchtvorrichtung angeordnet. Bevorzugt ist die Lichtbildgrößen-Ermittlungseinrichtung außerhalb eines Gehäuses zur Einhausung einer Vielzahl an Leuchtmittel der Leuchtvorrichtung und/oder einesTreibers zum Ansteuern der Vielzahl an Leuchtmittel (etwa LEDs) angeordnet.

Bei einer bevorzugten Ausführungsform sind die Lichtbildgrößen-Ermittlungseinrichtung und die Lichtbilderzeugungseinrichtung unabhängig voneinander betreibbar. Bevorzugt wird die Lichtbildgrößen-Ermittlungseinrichtung und die Lichtbilderzeugungseinrichtung unabhängig voneinander mit Energie (Strom) versorgt bzw. sind unabhängig voneinander mit Energie (Strom) versorgbar.

Die vorliegende Erfindung ist weiterhin gerichtet auf ein Fahrzeug, insbesondere Kraftfahrzeug, umfassend wenigstens eine obig beschriebene Leuchtvorrichtung und umfassend eine, insbesondere Prozessor- oder Controller-basierte, Lichtbildgrößen-Ermittlungseinrichtung zur Ermittlung der wenigstens einen Lichtbildgröße, bevorzugt der Vielzahl an Lichtbildgrößen und zur Übermittlung der wenigstens einen Lichtbildgröße, bevorzugt der Vielzahl an Lichtbildgrößen an die Lichtbilderzeugungseinrichtung.

Dabei ist die Lichtbildgrößen-Ermittlungseinrichtung außerhalb der Leuchtvorrichtung und/oder beabstandet zur Lichtbilderzeugungseinrichtung angeordnet. Bevorzugt ist die Lichtbildgrößen-Ermittlungseinrichtung nicht unmittelbar an der Leuchtvorrichtung angeordnet. Bevorzugt ist die Lichtbildgrößen-Ermittlungseinrichtung nicht an einem Gehäuse der Leuchtvorrichtung befestigt. Bevorzugt kontaktiert die Lichtbildgrößen-Ermittlungseinrichtung nicht die Leuchtvorrichtung. Bevorzugt sind zwischen der Lichtbildgrößen-Ermittlungseinrichtung und der Leuchtvorrichtung weitere Bauteile, insbesondere weitere Elektronikbauteile (beispielsweise wenigstens ein Zonen-Controller und/oder Switch und/oder Gateway einer/der Kommunikationseinrichtung) des Fahrzeugs, welche nicht Teil der Leuchtvorrichtung sind, angeordnet.

Bevorzugt handelt es sich bei der Lichtbildgrößen-Ermittlungseinrichtung um eine in Bezug auf die Leuchtvorrichtung externe Recheneinrichtung des Fahrzeugs.

Bevorzugt weist das Fahrzeug eine obig beschriebene Anordnung gemäß einer bevorzugten Ausführungsform auf.

In einer bevorzugten Ausführungsform ist die Lichtbildgrößen-Ermittlungseinrichtung eine zentrale Recheneinrichtung und/oder ein zentrales Steuergerät des Fahrzeugs.

Bevorzugt ist die Lichtbildgrößen-Ermittlungseinrichtung (etwa als zentrale Recheneinrichtung) dazu geeignet und bestimmt, die zur Erfüllung der von der Leuchtvorrichtung zu erfüllenden (vorgegebenen und/oder vorgebbaren) Lichtfunktion erforderliche und/oder geeignet und/oder bestimmte Lichtverteilung zu ermitteln (insbesondere im Rahmen eines Computer-implementierten Verfahrensschritts).

Bevorzugt erfolgt die Ermittlung dieser Lichtverteilung auf Grundlage der von der (obig beschriebenen) wenigstens einen Sensoreinrichtung des Fahrzeugs erfassten und/oder erzeugten Sensordaten.

Bevorzugt erfolgt die Ermittlung der wenigstens einen Lichtbildgröße und bevorzugt die Vielzahl der Lichtbildgrößen auf Grundlage der von der (obig beschriebenen) wenigstens einen Sensoreinrichtung des Fahrzeugs erfassten und/oder erzeugten Sensordaten.

Bevorzugt ist die Lichtbildgrößen-Ermittlungseinrichtung dazu geeignet und bestimmt, die Sensordaten zu empfangen und/oder von Speichereinrichtungen (etwa der wenigstens einen Sensoreinrichtung) in dem Fahrzeug abzurufen.

Die zentrale Recheneinrichtung und/oder das zentrale Steuergerät des Fahrzeuges ist dabei bevorzugt Bestandteil einer zentralen Fahrzeugelektronik, welche ein oder mehrere Leuchtvorrichtungen (etwa Scheinwerfer und/oder Bodenprojektor) des Fahrzeugs ansteuert.

Weiter kann es vorgesehen sein, dass die zentrale Recheneinrichtung und/oder das zentrale Steuergerät noch mit weiteren Elektronikkomponenten des Fahrzeuges, wie beispielsweise mit einer (obig beschriebenen Sensoreinrichtung), etwa mit einer oder mehreren Kameras und/oder mit einem Radarsensor und/oder mit Geräten zur Erfassung der Geschwindigkeit und/oder Lenkrichtung, elektrisch direkt oder indirekt verbunden ist.

In einer bevorzugten Ausführungsform ist die Leuchtvorrichtung eine, insbesondere hochaufgelöste, Leuchtvorrichtung mit mehr als 1.000 Pixel, bevorzugt mehr als 4.000 Pixeln zur pixelindividuell steuerbaren Lichtabstrahlung.

Dabei weist das Fahrzeug eine Kommunikationseinrichtung auf, über welche die wenigstens eine Lichtbildgröße, und bevorzugt die Vielzahl an Lichtbildgrößen, an die Lichtbilderzeugungseinrichtung übermittelbar ist. Dabei handelt es sich bei der Kommunikationseinrichtung um einen CAN-Bus und/oder eine Ethernet-Datenverbindung. Bevorzugt weist diese Kommunikationseinrichtung zumindest abschnittsweise eine Bandbreite auf, die eine 10 MBit-Bandbreite, bevorzugt eine 100 MBit-Bandbreite, nicht überschreitet.

Die die (insbesondere als zentrale Recheneinrichtung und/oder als zentrales Steuergerät ausgeführte) Lichtbildgrößen-Ermittlungseinrichtung kann über eine Ende-zu-Ende-Ethernet-Kommunikation mit der Leuchtvorrichtung (zur Übermittlung der wenigstens einen Lichtbildgröße) verbunden sein.

Alternativ kann die (insbesondere als zentrale Recheneinrichtung und/oder als zentrales Steuergerät ausgeführte) Lichtbildgrößen-Ermittlungseinrichtung über eine Zonenarchitektur mit Gateway mit der Leuchtvorrichtung (zur Übermittlung der wenigstens einen Lichtbildgröße) verbunden sein.

Die Kommunikationseinrichtung umfasst bevorzugt weiterhin ein oder mehrere Elektronikkomponenten, wie beispielsweise einen Switch und/oder eine Zonen-Controller (zur Steuerung der Stromverteilung im Fahrzeug).

So kann etwa die (insbesondere als zentrale Recheneinrichtung und/oder als zentrales Steuergerät ausgeführte) Lichtbildgrößen-Ermittlungseinrichtung über einen Switch mit einem Zonen-Controller (drahtgebunden und bevorzugt über eine Ethernet-Verbindung), insbesondere zur Übermittlung der wenigstens einen Lichtbildgröße, verbunden sein.

Der Switch ist wiederum (drahtgebunden und bevorzugt über eine Ethernet-Verbindung) mit einem Zonen-Controller verbunden.

Der Zonen-Controller kann (drahtgebunden und bevorzugt über eine Ethernet-Verbindung) mit der Leuchtvorrichtung verbunden sein. In diesem Fall kann der Zonen-Controller etwa als Switch ausgestaltet sein, sodass kein Gateway erforderlich ist.

In einer alternativen Ausführungsform ist der Zonen-Controller über eine CAN-Kommunikationsverbindung (CAN-FD) mit der Leuchtvorrichtung verbunden In diesem Fall ist eine Protokollkonvertierung im Gateway erforderlich.

Die hochaufgelöste Leuchtvorrichtung ist insbesondere zur pixelweisen und pixelindividuell steuerbaren Lichtabstrahlung in die Umgebung der Leuchtvorrichtung geeignet und bestimmt. Insbesondere ist die Leuchtvorrichtung dazu geeignet und bestimmt, eine aus einer Vielzahl von Lichtpixeln gebildete Abbildung zu erzeugen. Hierdurch ist die Leuchtvorrichtung dazu geeignet und bestimmt, Muster von im Wesentlichen beliebiger Form zu projizieren.

Die (hochaufgelöste) Leuchtvorrichtung weist bevorzugt wenigstens einen Lichtmodulator auf, welcher bevorzugt ausgebildet ist als DMD (Digital Mirror Device), LCD (Liquid Crystal Display) und/oder als Liquid Crystal on Silicon (LCoS, Abkürzung für engl. "Liquid Crystal on Silicon"). Dabei sind einzelne Bildelemente des Lichtmodulators bevorzugt ansteuerbar, wodurch Lichtverteilungen, die einem Muster von im Wesentlichen beliebiger Form folgen, erzeugt werden können. Bevorzugt weist die (hochaufgelöste) Leuchtvorrichtung eine Abbildungsoptik auf, welche im optischen Strahlengang zwischen einer Lichtquelle und dem Lichtmodulator angeordnet ist. Bevorzugt weist das hochauflösende Lichtmodul eine Projektionsoptik zum Projizieren des vom Lichtmodulator modulierten Lichts auf die Projektionsfläche auf.

Bevorzugt weist die (hochaufgelöste) Leuchtvorrichtung eine Mikropixel-LED auf, welche insbesondere mehrere Tausend einzeln ansteuerbare Pixel aufweist. Denkbar ist auch die Verwendung von Mikropixel-LEDs mit zwischen Tausend und zwanzig-Tausend Pixel, bevorzugt zwischen vier- und zwanzig-Tausend Pixel. Eine derartiges hochaufgelöste Leuchtvorrichtung ist dazu geeignet und bestimmt, in sehr hoher Auflösung Inhalte auszugeben. Bevorzugt weist die hochaufgelöste Leuchtvorrichtung eine in der optischen Abstrahlrichtung nach der Mikropixel-LED angeordnete Projektionsoptik auf.

Bei einem Matrix-Modul handelt es sich insbesondere um eine Lichtabgabeeinrichtung, aufweisend eine Matrix aus individuell steuerbaren Lichtabgabe-Pixelelementen zur Erzeugung eines aus Lichtpixeln gebildeten Ursprungslichtbilds. Bevorzugt weist das Matrix-Modul, insbesondere das LED-Matrix-Modul, eine Vielzahl matrixartig angeordneter Lichtquellen, insbesondere LEDs, und eine hiermit bestückte, Platine auf. Bevorzugt weist das Matrix-Modul, insbesondere das LED-Matrix-Modul, wenigstens einen Kühlkörper zur Kühlung der während ihres Betriebs entstehenden Wärme auf, wobei der Kühlkörper bevorzugt wärmeleitend mit der Platine verbunden ist. Bevorzugt ist jedem der Lichtquellen, insbesondere jeder LED, ein Primäroptikelement zur Formung und Richtungsgebung eines eingekoppelten Lichts zugeordnet, in das Licht der entsprechenden Lichtquelle, insbesondere der entsprechenden LED, eingekoppelt werden kann. Bevorzugt weist das Matrix-Modul wenigstens 8 und bevorzugt wenigstens 100 einzeln aktivierbare und/oder individuell ansteuerbare Lichtsegmente auf.

Bei der Leuchtvorrichtung kann es sich alternativ oder zusätzlich um einen DLP-Projektor (DLP für Digital Light Processing), insbesondere mit einer DMD-Einheit (DMD ist eine Abkürzung für engl. "Digital Micro Mirror Device", ein elektronisches Bauelement mit Mikrospiegeln), handeln. Dabei wird insbesondere jeder Bildpunkt bzw. Pixel durch einen einzelnen, ansteuerbaren Kippspiegel erzeugt. Je nach Kippzustand des jeweiligen Kippspiegels kann das Licht entweder durch ein Objektiv projiziert oder (insbesondere in einer Lichtfalle) geblockt werden.

Ein DLP-Projektor kann auch als 3-Chip-Projektor umgesetzt sein, in welchem jedem DMD-Chip eine, einander verschiedene Farbe zugewiesen ist.

Dabei kann ein DLP-Projektor wenigstens drei verschieden-farbiges Licht ausgebende Lichtquellen (etwa LEDs) aufweisen, deren ausgegebenes Licht, insbesondere zeitlich versetzt zueinander, etwa über einen spektralen Koppler auf eine DMD-Einheit geleitet wird. Durch die in kurzen Zeitabständen nacheinander ausgegebenen (einfarbigen) Bilder entsteht im menschlichen Auge eines Betrachters ein vollfarbiges Bild.

Dabei kann ein DLP-Projektor (alternativ auch) als 1-Chip-Projektor ausgeführt sein. In diesem sind bevorzugt verschiedene Farben durch ein drehendes Farbrad erzeugbar und derart erzeugte Strahlung wird auf einen reflektierenden DMD-Chip geleitet. Ein Eindruck eines vollfarbigen Bildes kann durch die Trägheit der Wahrnehmung im menschlichen Auge durch in schneller Folge produzierte Bilder entstehen.

Bei der Leuchtvorrichtung handelt es sich bevorzugt um eine Außen-Leuchtvorrichtung des Fahrzeugs, welche insbesondere Licht in eine äußere Umgebung des Fahrzeugs abgibt, etwa auf einen Straßenbereich in der Umgebung des Fahrzeugs. Beispielsweise kann es sich bei der Außen-Leuchtvorrichtung um einen Bodenprojektor handeln.

Bei der Leuchtvorrichtung kann es sich um eine Front- und/oder Rückleuchte und/oder einen Front- und/oder Rückscheinwerfer handeln.

Denkbar ist aber auch, dass es sich bei der Leuchtvorrichtung um eine Innen-Leuchtvorrichtung des Fahrzeugs handelt, welche Licht in Richtung eines Fahrzeuginnenraums (etwa in die Fahrzeugkabine) abgibt.

Die vorliegende Erfindung ist weiterhin gerichtet auf ein Fahrzeug, insbesondere Kraftfahrzeug, umfassend wenigstens eine obig beschriebene Leuchtvorrichtung und bevorzugt wenigstens zwei obig beschriebene Leuchtvorrichtungen für ein Fahrzeug entsprechend einer Ausführungsform (etwa an verschiedenen Fahrzeugseiten wie rechts oder links angeordnet, z.B. rechter und linker Scheinwerfer). Bei dem Fahrzeug kann es sich insbesondere um ein (motorisiertes) Straßenfahrzeug handeln. Bevorzugt umfasst das Fahrzeug eine (einzige) obig beschriebene Lichtbildgrößen-Ermittlungseinrichtung. Bevorzugt ermittelt die Lichtbildgrößen-Ermittlungseinrichtung für beide Leuchtvorrichtungen jeweils die an die jeweiligen Leuchtvorrichtungen zu übertragenen Lichtbildgrößen.

Bei einem Fahrzeug kann es sich um ein Kraftfahrzeug handeln, welches insbesondere ein von dem Fahrer selbst gesteuertes Kraftfahrzeug ("Driver only"), ein halbautonomes, autonomes (beispielsweise der Autonomiestufe Level 3 oder 4 oder 5 (der Norm SAE J3016)) oder selbstfahrendes Kraftfahrzeug ist. Die Autonomiestufe Level 5 bezeichnet dabei vollautomatisch fahrende Fahrzeuge. Ebenso kann es sich bei dem Fahrzeug um ein fahrerloses Transportsystem handeln. Das Fahrzeug kann dabei von einem Fahrer gesteuert werden oder autonom fahren. Darüber hinaus kann es sich bei dem Fahrzeug neben einem Straßenfahrzeug auch um ein Flugtaxi, ein Flugzeug und ein anderes Fortbewegungsmittel oder ein anderes Transportmittel handeln, beispielsweise ein Luft-, Wasser- oder Schienenfahrzeug.

Die vorliegende Erfindung ist weiterhin gerichtet auf ein Computerprogramm oder Computerprogrammprodukt, umfassend Programmmittel, insbesondere einen Programmcode, welcher zumindest einige der und bevorzugt alle Verfahrensschritte des erfindungsgemäßen Verfahrens, insbesondere diejenigen welche durch die Lichtbildgrößen-Ermittlungseinrichtung oder die Lichtbilderzeugungseinrichtung durchgeführt werden, und bevorzugt eine der beschriebenen bevorzugten Ausführungsformen repräsentiert oder kodiert und zum Ausführen durch eine Prozessoreinrichtung ausgebildet ist.

Die vorliegende Erfindung ist weiterhin gerichtet auf einen Datenspeicher, auf welchem zumindest eine Ausführungsform des erfindungsgemäßen Computerprogramms oder eine bevorzugte Ausführungsform des Computerprogramms gespeichert ist.

Die vorliegende Erfindung wurde in Bezug auf Leuchtvorrichtungen für ein Fahrzeug beschrieben. Dabei ist die vorliegende Erfindung auch übertragbar auf Leuchtvorrichtungen für eine Allgemeinbeleuchtung, Leuchtvorrichtungen für die Luft- und Raumfahrt und für die Consumer-Electronic (Verbraucher-Elektronik). Die Anmelderin behält sich vor, hierauf gerichtete Gegenstände ebenfalls zu beanspruchen.

Weitere Vorteile und Ausführungsformen ergeben sich aus den beigefügten Zeichnungen:
Darin zeigen:
- Fig. 1: eine Darstellung einer Verwendung einer erfindungsgemäßen Leuchtvorrichtung eines Fahrzeugs gemäß einer bevorzugten Ausführungsform;
- Fig. 2: eine schematische Darstellung einer Steuervorrichtung für eine erfindungsgemäße Leuchtvorrichtung gemäß einer bevorzugten Ausführungsform;
- Fig.: 3a eine schematische Darstellung einer Anordnung einer Lichtbildgrößen-Ermittlungseinrichtung und einer Lichtbilderzeugungseinrichtung einer Leuchtvorrichtung gemäß dem Stand der Technik; und
- Fig.: 3b eine schematische Darstellung einer erfindungsgemäßen Anordnung einer Lichtbildgrößen-Ermittlungseinrichtung und einer Lichtbilderzeugungseinrichtung einer Leuchtvorrichtung.

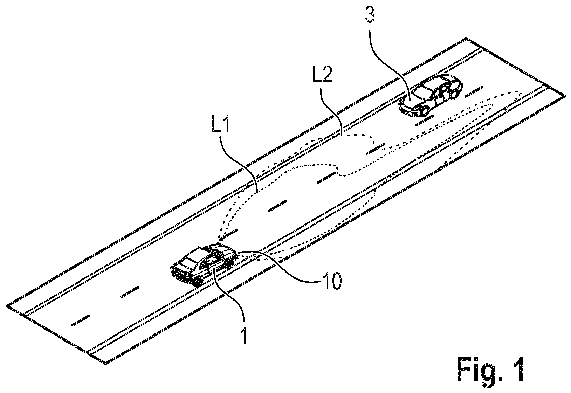

Fig. 1 zeigt eine Darstellung einer Verwendung einer erfindungsgemäßen Leuchtvorrichtung 10, hier ein Scheinwerfer, eines Fahrzeugs 1 gemäß einer bevorzugten Ausführungsform in einer Verkehrssituation, in welcher dem Fahrzeug 1 auf der Gegenfahrbahn ein Fahrzeug 3 als Gegenverkehr entgegenkommt.

Um eine Blendung des Fahrers des Fahrzeugs 3 zu verhindern und gleichzeitig eine gute Ausleuchtung der von dem Fahrzeug 1 zu befahrenden Fahrspur zu erreichen, gibt die Leuchtvorrichtung 10, bevorzugt automatisch, eine der asymmetrischen Lichtverteilungen aus, welche die mit den Bezugszeichen L1, L2 gekennzeichnete Ausleuchtung auf der Fahrbahn bewirkt. Die jeweiligen ausgegebenen Lichtverteilungen sind derart ausgestaltet, dass sie den Raumbereich der Fahrzeugumgebung, in welchem sich das entgegenkommende Fahrzeug 3 gerade befindet, ausspart. Da sich beide Fahrzeuge 1, 3 in Bewegung befinden, handelt es sich bei der Ermittlung und Erzeugung der jeweilig von der Leuchtvorrichtung 10 auszugebenden Lichtverteilung um einen hochdynamischen (Echtzeit-)Prozess.

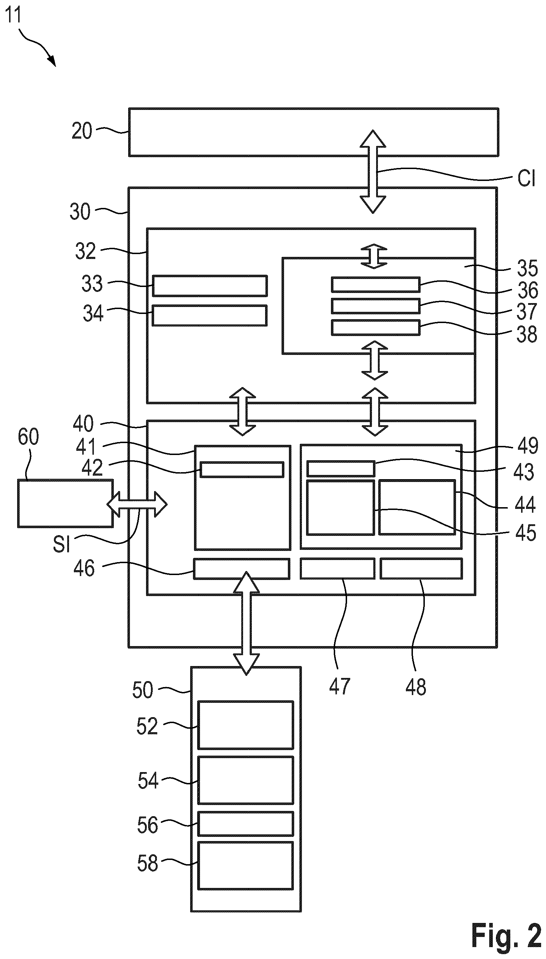

Figur 2 zeigt eine schematische Darstellung einer (erfindungsgemäßen) Steuervorrichtung 11 für eine (hier nicht dargestellte) erfindungsgemäße Leuchtvorrichtung 10 gemäß einer bevorzugten Ausführungsform.

Dabei umfasst die Steuervorrichtung 11 (wenigstens) zwei unabhängig voneinander betreibbare Recheneinrichtungen 20, 30, welche bevorzugt voneinander beabstandet angeordnet sind.

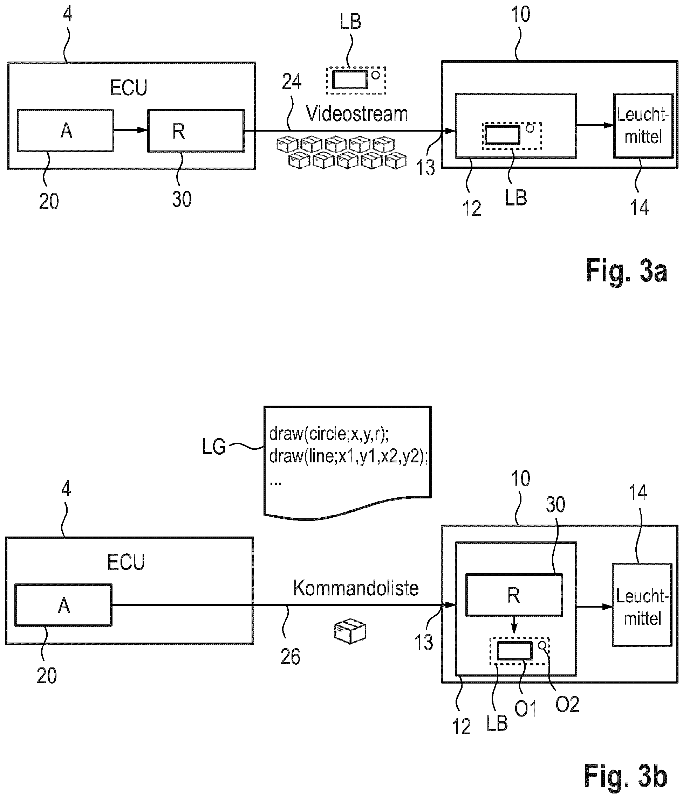

Dabei ist bevorzugt eine, in Bezug auf die Leuchtvorrichtung 10, externe Recheneinrichtung, nämlich ein Remote-Rechner, gekennzeichnet mit dem Bezugszeichen 20, vorgesehen. Dabei handelt es sich insbesondere um die obig bezeichnete (Prozessor- und/oder Controller-basierte) Lichtbildgrößen-Ermittlungseinrichtung 20. Die Aufgabe dieser Recheneinrichtung wird nachfolgend im Rahmen der Figurenbeschreibung zu Fig. 3b näher beschrieben.

Der Remote-Rechner 20 bzw. die Lichtbildgrößen-Ermittlungseinrichtung 20 ist insbesondere außerhalb der Leuchtvorrichtung 20 und besonders bevorzugt außerhalb eines Gehäuses der Leuchtvorrichtung 10 angeordnet. Bevorzugt kontaktiert die Lichtbildgrößen-Ermittlungseinrichtung 20 die Leuchtvorrichtung 10 nicht.

Über eine Kommunikationsschnittstelle bzw. eine Übertragungsschnittstelle CI ist der Remote-Rechner bzw. die (Prozessor- und/oder Controller-basierte) Lichtbildgrößen-Ermittlungseinrichtung 20 mit einer weiteren Recheneinrichtung 30, obig bezeichnet als Lichtbilderzeugungseinrichtung 30, zum Datenaustausch bzw. zur Übermittlung von Kommunikationsdaten von dem Remote-Rechner an die weitere Recheneinrichtung bzw. an die Lichtbilderzeugungseinrichtung 30 verbunden.

Die Lichtbilderzeugungseinrichtung 30 übermittelt bevorzugt Steuergrößen zum Ansteuern der pixelindividuell ansteuerbaren Pixel der Leuchtvorrichtung. Insbesondere sind die Steuergrößen charakteristisch für eine Ansteuerung jedes anzusteuernden Pixels der Leuchtvorrichtung zur pixelindividuellen Lichtausstrahlung.

Bei dieser weiteren Recheneinrichtung 30 handelt es sich bevorzugt um einen Renderer-Rechner. Bevorzugt ist die weitere Recheneinrichtung 30 (insbesondere fester) Bestandteil der Leuchtvorrichtung 10 (hier nicht dargestellt). Denkbar ist beispielsweise, dass die weitere Recheneinrichtung bzw. die Lichtbilderzeugungseinrichtung 30 von einem Gehäuse der Leuchtvorrichtung umfasst oder mit dem Gehäuse verbunden ist und/oder in unmittelbarer Nähe der Lichtquellen der Leuchtvorrichtung angeordnet ist.

Das Bezugszeichen 32 kennzeichnet dabei eine Runtime Environment (engl. für Laufzeitumgebung). In dieser läuft ein Codec 33, bevorzugt eine Bildstabilisierung 34 sowie eine Rendering-Engine 35. Die Rendering-Engine 35 umfasst bevorzugt einen Parser 36, Komfort-Funktionen 37 sowie eine Library bzw. Bibliothek.

Das Bezugszeichen 40 kennzeichnet die Hardware des Renderer-Rechners 30. Diese umfasst eine nicht-flüchtige Speichereinrichtung NVM (Abkürzung für "non volatile memory", in Deutsch: nicht-flüchtiger Speicher), hier gekennzeichnet durch das Bezugszeichen 41, in welcher etwa Parameter 42 ablegbar sind.

Eine weitere Hardware-Komponente stellt ein RAM (Abkürzung für Random-Access Memory, Direktzugriffsspeicher), hier gekennzeichnet durch das Bezugszeichen 49, dar. In diesem können Texturen 43 abgelegt sein. Das RAM kann weiterhin einen Frame Buffer 45 sowie einen Shadow Buffer 44 umfassen.

Weiter umfasst die Hardware 40 bevorzugt eine Schnittstelle für einen Datenbus, z.B. SPI (Abkürzung für "Serial Peripheral Interface"), gekennzeichnet mit dem Bezugszeichen 46, sowie bevorzugt eine Video-Schnittstelle 47 sowie eine Kontroll-Schnittstelle, gekennzeichnet mit dem Bezugszeichen 48.

Bevorzugt umfasst die Hardware 40 eine Serviceschnittstelle zur Kommunikation mit einem sogenannten "End-of-Line-Rechner" 60 (Prüfrechner).

Bevorzugt ist die Lichtbilderzeugungseinrichtung 30, hier der Renderer-Rechner, dazu geeignet und bestimmt, insbesondere via der Schnittstelle 46 für einen Datenbus (z.B. dem SPI), Daten auszutauschen mit einem (in Bezug auf die Lichtbilderzeugungseinrichtung bzw. den Renderer-Rechner) externen nicht-flüchtigen Speichereinrichtung 50 (NVM) auszutauschen. Dieser kann bevorzugt eine Start-up-Kommandoliste 52, eine Fail Safe Kommandoliste, Texturen und/oder Textur-Sequenzen umfassen bzw. in diesem abgelegt sein.

Fig. 3a zeigt eine schematische Darstellung einer Anordnung einer Lichtbildgrößen-Ermittlungseinrichtung 20 und einer Lichtbilderzeugungseinrichtung 30 einer Leuchtvorrichtung 10 gemäß dem Stand der Technik.

Hier wird die Leuchtvorrichtung 10, beispielsweise ein hochaufgelöster Scheinwerfer und/oder ein Bodenprojektor, mit einer Vielzahl, beispielsweise als LEDs ausgestalteter, Leuchtmittel 14 pixelbasiert per Video-Streaming von einem (in Bezug auf die Leuchtvorrichtung 10) externen Steuergerät 4 (ECU, Abkürzung für engl. ECU = electronic control unit) angesteuert. Der Videostream wird dabei über die Kommunikationseinrichtung 24 von dem Steuergerät 20 über eine Schnittstelle 13 an die Leuchtvorrichtung 10, insbesondere an die Lichtbilderzeugungseinrichtung 30 der Leuchtvorrichtung 10, bevorzugt einen in der Leuchtvorrichtung angeordneten Netzwerkknoten, bevorzugt Endpunkt (engl. "end point"), eines Kommunikationsnetzwerkes des Fahrzeugs, übertragen.

Das (in Bezug auf die Leuchtvorrichtung 10) externe Steuergerät 4 beinhaltet einen Algorithmus zur Szeneberechnung für die von der Leuchtvorrichtung 10 auszugebenden Lichtverteilung etwa auf Basis von Sensordaten (ausgeführt durch die schematisch dargestellte Lichtbildgrößen-Ermittlungseinrichtung 20) als auch ein Rendering R für die Berechnung der Einzelbilder (ausgeführt durch die schematisch dargestellte Lichtbild-Erzeugungseinrichtung 30).

Dabei sind sowohl die Lichtbildgrößen-Ermittlungseinrichtung 20 als auch die Lichtbild-Erzeugungseinrichtung 30 Teil des (in Bezug auf die Leuchtvorrichtung 10) externen Steuergeräts 4.

Die einzelnen Lichtbilder LB werden daher bereits ortsaufgelöst bzw. pixelbasiert per Videostream von dem externen (bevorzugt zentralen) Steuergerät an die Leuchtvorrichtung 10, insbesondere an einen Endpunkt 12 der Leuchtvorrichtung 10 übertragen, von welchem eine insbesondere pixelindividuelle Ansteuerung der Vielzahl an Leuchtmittel 14, beispielsweise LEDs, auf Grundlage des Lichtbilds LB erfolgt.

Fig. 3b zeigt eine schematische Darstellung einer erfindungsgemäßen Anordnung einer Lichtbildgrößen-Ermittlungseinrichtung 20 und einer Lichtbilderzeugungseinrichtung 30 einer Leuchtvorrichtung 10.

Vorgeschlagen wird eine Trennung des Algorithmus A zur Szeneberechnung durch die Lichtbildgrößen-Ermittlungseinrichtung 20 und ein Rendering R des Lichtbilds (LB) durch die Lichtbilderzeugungseinrichtung 30 und Verortung auf zwei unabhängige Recheneinheiten, die über ein Fahrzeugnetzwerk bzw. eine Kommunikationseinrichtung 26 verbunden sind. Dabei weist die Leuchtvorrichtung 10 eine Schnittstelle 13 auf, über welche sie über die Kommunikationseinrichtung 26 übertragene Daten, etwa die obig beschriebene wenigstens eine Lichtbildgröße oder mehrere Lichtbildgrößen, empfangen kann.

Dazu werden in einem externen/zentralen Steuergerät 4 des Fahrzeugs 1 die Szeneelemente (Objekte O1, O2) (durch die Lichtbildgrößen-Ermittlungseinrichtung 20) berechnet und über eine Schnittstelle bzw. über die Kommunikationseinrichtung 26 bevorzugt als Kommandoliste (LG) via Kommunikationseinrichtung 26 (etwa Fahrzeugbus, z.B. 10 Mbit-Ethernet) zur Leuchtvorrichtung 10 bzw. Leuchte (bevorzugt an die Lichtbilderzeugungseinrichtung 30 der Leuchtvorrichtung 10), insbesondere an einen Netzwerkknoten (beispielsweise einen Endpunkt 12) eines Kommunikationsnetzwerkes des Fahrzeugs) übertragen.

Die Kommandoliste LG kann etwa Befehle bzw. Kommandos umfassen, welche Objekte an welcher Position zu erzeugen sind. In Fig. 3b sind für die Kommandos die illustrierenden Beispiele angegeben:
draw(circle;x,y,r):
   Zeichnen eines Kreises mit Mittelpunkt an der Position x,y und Kreisradius r
draw(line;x1 ,y1 ,x2,y2):
   Zeichnen einer Linie von Anfangspunkt x1,y1 zu Endpunkt x2,y2.

In der Leuchtvorrichtung 10 wird das Lichtbild (LB) aus den Objekten O1, O2 berechnet (gerendert R) durch die hier schematisch dargestellte Lichtbilderzeugungseinrichtung 30. Damit kann das Lichtbild LB mit geringem Bandbreitenbedarf und insbesondere unabhängig von der Auflösung übertragen werden.

Die Berechnung des Lichtbilds LB in der Leuchte bzw. Leuchtvorrichtung 10 (durch die Lichtbilderzeugungseinrichtung 30) erfolgt vorzugsweise per Software-Rendering auf einem Miikrokontroller (MCU), System-on-Chip (SoC) oder ASIC.

Auch hier wird auf Grundlage des erzeugten (ortsaufgelösten) Lichtbilds LB die Vielzahl an Leuchtmittel 14, beispielsweise ausgeführt als LEDs 14, insbesondere pixelindividuell angesteuert und pixelindividuell Licht durch die Vielzahl an Leuchtmittel 14 ausgegeben.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

### Bezugszeichenliste

- 1: Fahrzeug
- 3: entgegenkommendes Fahrzeug
- 4: externes Steuergerät
- 10: Leuchtvorrichtung
- 11: Steuervorrichtung
- 12: Endpunkt
- 13: Schnittstelle
- 14: Leuchtmittel, z.B. LED
- 20: Lichtbildgrößen-Ermittlungseinrichtung
- A: Algorithmus
- R: Renderer
- 24, 26: Kommunikationseinrichtung
- 30: Lichtbilderzeugungseinrichtung
- CI: Schnittstelle
- 32: Runtime Environment
- 33: Codec
- 34: Bildstabilisierung
- 35: Rendering-Engine
- 36: Parser
- 37: Komfort-Funktionen
- 38: Library bzw. Bibliothek
- 40: Hardware
- 41: nicht-flüchtige Speichereinrichtung
- 42: Parameter
- 43: R-Texturen
- 44: Shadow Buffer
- 45: Frame Buffer
- 46: Schnittstelle für einen Datenbus
- 47: Video-Schnittstelle
- 48: Kontroll-Schnittstelle
- 49: RAM
- 50: Nicht-flüchtige Speichereinrichtung
- 52: Start-up Kommandoliste
- 54: Fail safe Kommandoliste
- 56: S-Texturen
- 58: S-Textur Sequenzen
- 60: End-of-Line Rechner
- SI: Serviceschnittstelle
- L1, L2: Lichtverteilung
- LB: Lichtbild
- LG: Lichtbildgröße
- O1, O2: Szeneobjekt

## Patentansprüche

1. Verfahren zum Betreiben wenigstens einer Leuchtvorrichtung (10) eines Fahrzeugs (1), insbesondere eines Scheinwerfers und/oder eines Bodenprojektors des Fahrzeugs (1), zur Ausgabe einer Lichtverteilung (L1, L2) auf Grundlage eines, insbesondere in Echtzeit erzeugten, Lichtbilds (LB), welches wenigstens bereichsweise und bevorzugt vollständig von einer, insbesondere Prozessor- und/oder Controller-basierten, Lichtbilderzeugungseinrichtung (30) des Fahrzeugs (1) in Abhängigkeit von wenigstens einer nicht-ortsaufgelösten Lichtbildgröße (LG), bevorzugt von einer Vielzahl nicht-ortsaufgelöster Lichtbildgrößen (LG), erzeugt wird, wobei die wenigstens eine Lichtbildgröße (LG) charakteristisch ist für wenigstens einen Bereich des zu erzeugenden Lichtbilds (LB), bevorzugt für das gesamte zu erzeugende Lichtbild, **dadurch gekennzeichnet, dass** die Lichtbilderzeugungseinrichtung (30) zur wenigstens bereichsweisen Erzeugung des Lichtbilds von einer, von ihr beabstandeten, insbesondere Prozessor- und/oder Controller-basierten, Lichtbildgrößen-Ermittlungseinrichtung (20) des Fahrzeugs (1) die wenigstens eine Lichtbildgröße (LG) empfängt.

2. Verfahren nach Anspruch 1, **dadurch gekennzeichnet, dass** die Leuchtvorrichtung (10) die Lichtbilderzeugungseinrichtung (30) umfasst.

3. Verfahren nach einem der vorhergehenden Ansprüche, **dadurch gekennzeichnet, dass** die Lichtbilderzeugungseinrichtung (30) auf Grundlage der wenigstens einen Lichtbildgröße (LG) und bevorzugt auf Grundlage der Vielzahl von Lichtbildgrößen den Bereich des Lichtbilds (LB) und bevorzugt das gesamte Lichtbild (LB) durch Rendern erzeugt.

4. Verfahren nach einem der vorangegangenen Ansprüche, **dadurch gekennzeichnet, dass** die wenigstens eine Lichtbildgröße (LG) und bevorzugt die Vielzahl an Lichtbildgrößen (LG) für eine geometrische Beschreibung des zu erzeugenden Lichtbilds (LB) charakteristisch ist.

5. Verfahren nach einem der vorangegangenen Ansprüche, **dadurch gekennzeichnet, dass** die Lichtbildgrößen-Ermittlungseinrichtung (20) wenigstens ein Szeneobjekt (O1, O2) und bevorzugt eine Vielzahl von Szeneobjekte (O1, O2) zur Erzeugung des Lichtbilds (LB) und/oder zur Erzeugung der wenigstens einen Lichtbildgröße (LG) und bevorzugt der Vielzahl von Lichtbildgrößen (LG) ermittelt.

6. Verfahren nach einem der vorangegangenen Ansprüche, **dadurch gekennzeichnet, dass** die wenigstens eine Lichtbildgröße (LG) und bevorzugt die Vielzahl an Lichtbildgrößen (LG) jeweils charakteristisch ist für ein Kommando zur Erzeugung eines Szeneobjekts und/oder für eine Kommandoliste zur Erzeugung einer Szene.

7. Verfahren nach einem der vorangegangenen Ansprüche, **dadurch gekennzeichnet, dass** die wenigstens eine Lichtbildgröße (LG) und bevorzugt die Vielzahl an Lichtbildgrößen, besonderes bevorzugt die für eine Kommandoliste zur Erzeugung einer Szene charakteristischen Daten, über ein Fahrzeugnetzwerk, bevorzugt über einen Fahrzeugbus, zur Lichtbilderzeugungseinrichtung (30) übertragen werden.

8. Leuchtvorrichtung (10), insbesondere Scheinwerfer und/oder Bodenprojektor, für ein Fahrzeug (1) zur Ausgabe einer Lichtverteilung (L1, L2) auf Grundlage eines, insbesondere in Echtzeit erzeugten, Lichtbilds (LB), welches wenigstens bereichsweise und bevorzugt vollständig von einer, insbesondere Prozessor- und/oder Controller-basierten, Lichtbilderzeugungseinrichtung (30) der Leuchtvorrichtung (10) in Abhängigkeit von wenigstens einer nicht-ortsaufgelösten Lichtbildgröße (LG), bevorzugt von einer Vielzahl nicht-ortsaufgelöster Lichtbildgrößen (LG), erzeugt wird, wobei die wenigstens eine Lichtbildgröße (LG) charakteristisch ist für wenigstens einen Bereich des zu erzeugenden Lichtbilds (LB), bevorzugt für das gesamte zu erzeugende Lichtbild, **dadurch gekennzeichnet, dass** die Leuchtvorrichtung (10) eine Schnittstelle (13) zum Empfangen der wenigstens einen Lichtbildgröße (LG) und bevorzugt der Vielzahl von Lichtbildgrößen (LG) aufweist.

9. Leuchtvorrichtung (10) nach dem vorhergehenden Anspruch, **dadurch gekennzeichnet, dass** es sich bei der Lichtbilderzeugungseinrichtung (30) um eine Rendereinrichtung zur Durchführung wenigstens eines Rendervorgangs handelt.

10. Leuchtvorrichtung (10) nach einem der vorhergehenden Ansprüche, **dadurch gekennzeichnet, dass** die Lichtbilderzeugungseinrichtung (30) ausgewählt ist aus einer Gruppe von Recheneinrichtungen, welche Mikrokontroller (MCU), System-on-Chip (SoC), ASICs (anwendungsspezifische integrierte Schaltungen) und dergleichen sowie Kombinationen hiervon umfasst.

11. Anordnung einer Lichtbilderzeugungseinrichtung (30) einer Leuchtvorrichtung (10) gemäß dem vorhergehenden Anspruch und einer, insbesondere Prozessor- und/oder Controller-basierten, Lichtbildgrößen-Ermittlungseinrichtung (20) zur Ermittlung der wenigstens einen Lichtbildgröße (LG), bevorzugt der Vielzahl an Lichtbildgrößen (LG) und zur Übermittlung der wenigstens einen Lichtbildgröße (LG), bevorzugt der Vielzahl an Lichtbildgrößen (LG) an die Lichtbilderzeugungseinrichtung (30), **dadurch gekennzeichnet, dass** die Lichtbildgrößen-Ermittlungseinrichtung (20) außerhalb der Leuchtvorrichtung (10) und/oder beabstandet zur Lichtbilderzeugungseinrichtung (30) angeordnet ist.

12. Anordnung gemäß dem vorhergehenden Anspruch, **dadurch gekennzeichnet, dass** die Lichtbildgrößen-Ermittlungseinrichtung (20) und die Lichtbilderzeugungseinrichtung (30) unabhängig voneinander betreibbar sind.

13. Fahrzeug (1), insbesondere Kraftfahrzeug, umfassend wenigstens eine Leuchtvorrichtung (10) gemäß einem der vorhergehenden Ansprüche und umfassend eine, insbesondere Prozessor- und/oder Controller-basierte, Lichtbildgrößen-Ermittlungseinrichtung (20) zur Ermittlung der wenigstens einen Lichtbildgröße (LG), bevorzugt der Vielzahl an Lichtbildgrößen (LG) und zur Übermittlung der wenigstens einen Lichtbildgröße (LG), bevorzugt der Vielzahl an Lichtbildgrößen (LG) an die Lichtbilderzeugungseinrichtung (30), wobei die Lichtbildgrößen-Ermittlungseinrichtung (20) außerhalb der Leuchtvorrichtung (10) und/oder beabstandet zur Lichtbilderzeugungseinrichtung (30) angeordnet ist.

14. Fahrzeug (1) gemäß einem der vorhergehenden Ansprüche, **dadurch gekennzeichnet, dass** die Lichtbildgrößen-Ermittlungseinrichtung (20) eine zentrale Recheneinrichtung des Fahrzeugs (1) ist.

15. Fahrzeug (1) gemäß einem der vorhergehenden Ansprüche, **dadurch gekennzeichnet, dass** die Leuchtvorrichtung (10) eine, insbesondere hochaufgelöste, Leuchtvorrichtung mit mehr als 1.000 Pixeln, bevorzugt mehr als 4.000 Pixeln zur pixelindividuell steuerbaren Lichtabstrahlung ist, wobei das Fahrzeug eine Kommunikationseinrichtung aufweist, über welche die wenigstens eine Lichtbildgröße (LG), und bevorzugt die Vielzahl an Lichtbildgrößen (LG), an die Lichtbilderzeugungseinrichtung (30) übermittelbar ist, **dadurch gekennzeichnet, dass** es sich bei der Kommunikationseinrichtung (26) um einen CAN-Bus und/oder eine Ethernet-Datenverbindung handelt.
